# EUROPÄISCHE PATENTANMELDUNG

(11) **EP 1 271 931 A2**
(43) Veröffentlichungstag der Anmeldung: **02.01.2003**
(21) Anmeldenummer: 02013033.2
(22) Anmeldetag: 13.06.2002
(51) Int. Cl.: H04N 3/34

(54) **Verfahren und Vorrichtung zur Darstellung eines Fernsehbildes oder Monitorbildes auf einem Bildschirm**

(30) Priorität: 21.06.2001 DE 10129917
(71) Anmelder: Micronas GmbH, 79108 Freiburg (DE)
(72) Erfinder: Flamm, Peter Dipl.-Ing., 79232 March (DE)
(74) Vertreter: Patentanwälte Westphal, Mussgnug & Partner

(57) **Zusammenfassung**

Die Erfindung betrifft Verfahren zur Darstellung eines Fernsehbildes oder Monitorbildes auf einem Bildschirm.

Um eine zumindest weitgehend zeilenfreie Wiedergabe zu ermöglichen und dennoch den Vertikalkontrast des Bildes in allenfalls geringem Maß zu beeinträchtigen wird vorgeschlagen, dass aus einem Bildeingangssignal (Y) ein Vertikalkontrastwert ermittelt wird,
der Vertikalkontrastwert mit einem Grenzwert (a, b) verglichen wird und in Abhängigkeit von diesem Vergleich eine vertikale Verbreiterung eines von dem Abtaststrahl erfassten Leuchtpunktbereiches der Zeilen eingestellt wird, vorzugsweise durch Vertikalwobbelung des Abtaststrahls.

In dem Fall, dass ein Betrag des Vertikalkontrastwertes unterhalb des Grenzwertes (a, b) liegt, wird eine geringere vertikale Verbreiterung des Leuchtpunktbereiches eingestellt als in dem Fall, dass der Betrag des Vertikalkontrastwertes oberhalb des Grenzwertes (a, b) liegt.

## Beschreibung

Die Erfindung bezieht sich auf ein Verfahren und eine Vorrichtung zur Darstellung eines Fernsehbildes oder Monitorbildes auf einem Bildschirm.

Bei der Bildwiedergabe auf einem Bildschirm einer Kathodenstrahlröhre, z.B. eines Fernsehers oder Monitors, füllt der durch den Abtaststrahl definierte Leuchtpunkt in der Regel den für eine Zeile vorgesehenen Zeilenbereich nicht vollständig aus. Dies führt oftmals zu einer Verschlechterung des Bildeindrucks beim Betrachter.

Hiergegen sind verschiedene Maßnahmen bekannt, mit denen das Fernseh- oder Monitorbild zeilenfrei wiedergegeben werden kann. Zum einen kann die Vertikalablenkung mit hoher Frequenz so stark gewobbelt werden, das heißt periodisch abgelenkt werden, dass der wandernde Leuchtpunkt den Zeilenbereich ausfüllt. Weiterhin kann der Leuchtpunkt in vertikaler Richtung z.B. zu einer Ellipse verzerrt werden. Durch beide Verfahren können die Zwischenräume zwischen den Leuchtpunktbereichen verschwinden.

Nachteilig an derartigen Maßnahmen ist jedoch, dass der Schärfeeindruck des Bildes in vertikaler Richtung reduziert wird, das heißt, dass feine Strukturen in vertikaler Richtung unschärfer wiedergegeben werden.

Der Erfindung liegt die Aufgabe zugrunde, ein Verfahren und eine Vorrichtung zur Darstellung eines Fernsehbildes oder Monitorbildes auf einem Bildschirm zu schaffen, mit denen eine zumindest weitgehend zeilenfreie Wiedergabe ermöglicht ist und dennoch der Vertikalkontrast des Bildes in allenfalls geringem Maß beeinträchtigt wird.

Diese Aufgabe wird durch ein Verfahren nach Anspruch 1 und eine Vorrichtung nach Anspruch 11 gelöst. Die Unteransprüche beschreiben bevorzugte Weiterbildungen der Erfindung.

Erfindungsgemäß wird somit nicht wie bei herkömmlichen Verfahren entweder gar keine oder eine konstante Vertikalverbreiterung durchgeführt, sondern zunächst ermittelt, ob das wiederzugebende Bild einen derartig hohen Vertikalkontrast aufweist, dass die Bildwiedergabe bei einer Vertikalverbreiterung der Leuchtpunktbereiche beeinträchtigt werden kann. In Abhängigkeit von dieser Ermittlung erfolgt gegebenenfalls eine Vertikalverbreiterung des Leuchtpunktbereiches.

Erfindungsgemäß wird aus dem Bildeingangssignal ein Vertikalkontrastwert ermittelt. Dies kann vorzugsweise durch einen Vergleich verschiedener Zeilen des Bildes geschehen, indem das Bildeingangssignal verzögert wird und eine Differenz des Bildeingangssignals mit dem verzögerten Bildeingangssignal gebildet wird. Die Dauer der Verzögerung kann z.B. eine Zeile betragen, so dass aufeinanderfolgende Zeilen verglichen werden. Dies ist insbesondere für progressive Signale vorteilhaft. Alternativ hierzu kann z.B. bei Interlaced-Signalen eine Verzögerung um ein Halbbild plus oder minus eine halbe Zeile durchgeführt werden, so dass z.B. bei dem PAL-System eine Verzögerung um 312 oder 313 Zeilen erfolgt.

Die ermittelte Differenz des verzögerten und unverzögerten Bildeingangssignals wird erfindungsgemäß als Vertikalkontrastwert genommen, der ein Maß für die erforderliche Vertikalverbreiterung darstellt. Durch einen Vergleich des Vertikalkontrastwertes mit einem oder mehreren Grenzwerten kann ermittelt werden, inwieweit eine Verbreiterung der vertikalen Erstreckung des beleuchteten Bereiches beziehungsweise Leuchtpunktbereiches durchzuführen ist.

Diese Verbreiterung kann zum einen durch eine Verzerrung des Leuchtpunktes in vertikaler Richtung erfolgen. Vorteilhafterweise erfolgt jedoch eine Wobbelung, d. h. eine periodische Ablenkung des Abtaststrahls mit hinreichend hoher Frequenz, so dass durch den gewobbelten Abtaststrahl der Zeilenbereich des Bildschirms in gewünschter Weise erfasst wird. Hierzu ist die Wobbelfrequenz vorzugsweise höher als die Pixelfrequenz.

Diese Ablenkung des Abtaststrahls kann durch die bereits vorhandenen Vertikalablenkspulen der Kathodenstrahlröhre oder durch zusätzliche Ablenkspulen erfolgen. Hierzu wird ein Wobbelsignal mit hinreichend hoher Frequenz in geeigneter Weise moduliert. Diese Modulation kann vorgenommen werden, indem von einer Funktionseinrichtung in Abhängigkeit von dem Vertikalkontrastsignal ein Modulationssignal erzeugt wird, das in einer Modulationseinrichtung dem Wobbelsignal überlagert wird, z.B. durch Multiplikation.

Die Funktionseinrichtung, die das Vertikalkontrastsignal aufnimmt und das Modulationssignal ausgibt, hat hierbei im allgemeinen eine nichtlineare Kennlinie. Hierbei wird vorteilhafterweise oberhalb eines oberen Grenzwertes keine Wobbelung des Abtaststrahls vorgenommen, so dass die Funktionseinrichtung ein Modulationssignal mit dem Wert Null ausgibt. Unterhalb eines unteren Grenzwertes, bei dem ein hinreichend vertikalkontrastarmes Bild vorliegt, kann eine maximale Wobbelung vorgenommen werden, so dass die Funktionseinrichtung an die Modulationseinrichtung ein maximales Modulationssignal ausgibt. Indem zwischen den beiden Grenzwerten ein linearer Übergang erfolgt, kann eine Funktionseinrichtung mit trapezförmiger Kennlinie verwendet werden. Alternativ hierzu können jedoch auch andere Kennlinien verwendet werden, die sich in praktischen Tests als vorteilhaft erwiesen haben.

Die Erfindung wird im folgenden anhand der beiliegenden Zeichnungen an einigen Ausführungsformen näher erläutert. Es zeigen:
Fig. 1 ein Blockschaltbild einer Vorrichtung gemäß einer Ausführungsform der Erfindung;
Fig. 2 eine Kennlinie einer Funktionseinrichtung dieser Vorrichtung.

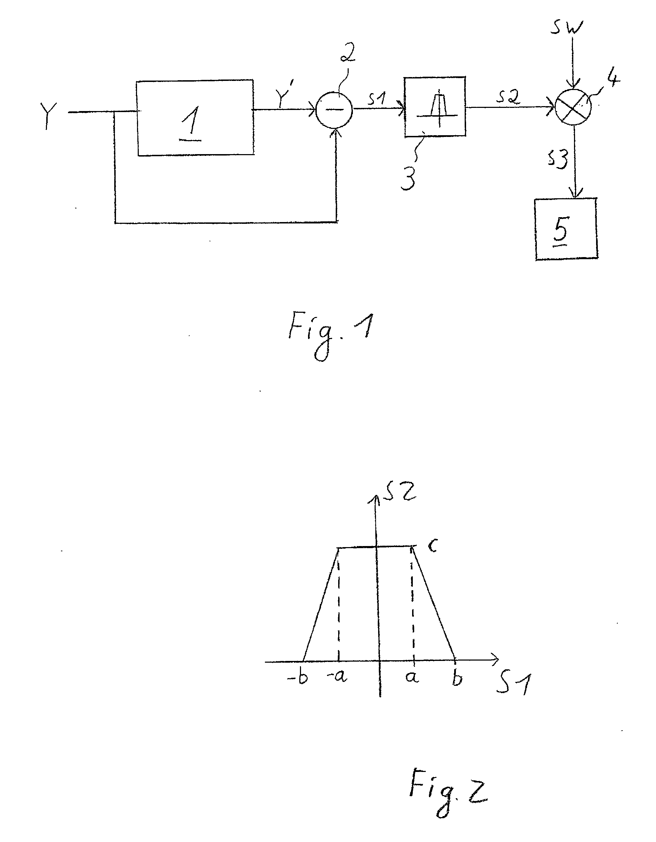

Gemäß Figur 1 weist eine erfindungsgemäße Vorrichtung eine Verzögerungseinrichtung 1 auf, die ein Bildeingangssignal Y aufnimmt und ein verzögertes Bildeingangssignal ý ausgibt. Hierzu kann jedes Fernseh- oder Videosignal, insbesondere auch ein RGB-Signal beziehungsweise eines der drei Signale R, G und B verwendet werden. Die Verzögerung kann z.B. bei einem progressiven Signal eine Zeile und z.B. bei einem Interlaced-Signal ein Halbbild plus oder minus eine halbe Zeile betragen, so dass sie z.B. bei PAL 312 oder 313 Zeilen beträgt.

Das unverzögerte Bildeingangssignal Y und das verzögerte Bildeingangssignal ý werden einer Differenz bildenden Einrichtung 2, z.B. einem Subtrahierer, zugeführt, der die beiden Signale subtrahiert und einen Vertikalkontrastwert ermittelt, der als Vertikalkontrastsignal s1 an eine Funktionseinrichtung 3 weitergegeben wird.

Die Funktionseinrichtung 3 gibt in Abhängigkeit von dem Vertikalkontrastsignal s1 ein Modulationssignal s2 aus. Die Ausgangskennlinie der Funktionseinrichtung 3 ist in Figur 2 gezeigt, in der der Wert des Modulationssignals s2 als Funktion des Vertikalkontrastwertes gezeigt ist. Weiterhin sind ein unterer Grenzwert a und ein oberer Grenzwert b eingezeichnet. Bei einem Vertikalkontrastwert von weniger als -b oder mehr als b wird ein Modulationssignal s2 mit dem Wert Null ausgegeben. Bei einem Vertikalkontrastwert zwischen -a und a wird ein Modulationssignal mit einem Maximalwert c ausgegeben. Zwischen diesen Bereichen, das heißt für Vertikalkontrastwerte mit einem Betrag zwischen a und b, wird ein geeigneter Übergang gewählt, der gemäß Figur 2 linear gewählt ist.

Die Funktionseinrichtung 3 gibt das Modulationssignal s2 an einen Modulator 4 weiter, der insbesondere als Multiplizierer ausgeführt sein kann. Der Modulator nimmt weiterhin ein sich periodisch änderndes Wobbelsignal sw auf, dessen Frequenz höher als die Pixelfrequenz ist. Durch Multiplikation wird ein moduliertes Wobbelsignal s3 erzeugt und Vertikalablenkspulen 5 zugeführt.

Bezugszeichenliste
- 1: Verzögerungseinrichtung
- 2: Differenz bildende Einrichtung
- 3.: Funktionseinrichtung
- 4.: Modulator
- 5.: Ablenkspulen
- a: unterer Grenzwert von s1
- b: oberer Grenzwert von s1
- c: Maximalwert von s2
- s1: Differenzsignal
- s2: Modulationssignal
- s3: moduliertes Wobbelsignal
- sw: Wobbelsignal
- Y: Bildeingangssignal
- ý: verzögertes Bildeingangssignal

## Patentansprüche

1. Verfahren zur Darstellung eines Fernsehbildes oder Monitorbildes auf einem Bildschirm, bei dem aus einem Bildeingangssignal (Y) ein Vertikalkontrastwert ermittelt wird,
der Vertikalkontrastwert mit einem Grenzwert (a, b) verglichen wird und in Abhängigkeit von diesem Vergleich eine vertikale Verbreiterung eines von dem Abtaststrahl erfassten Leuchtpunktbereiches der Zeilen eingestellt wird,
wobei in dem Fall, dass ein Betrag des Vertikalkontrastwertes unterhalb des Grenzwertes (a, b) liegt, eine geringere vertikale Verbreiterung des Leuchtpunktbereiches eingestellt wird als in dem Fall, dass der Betrag des Vertikalkontrastwertes oberhalb des Grenzwertes (a, b) liegt.

2. Verfahren nach Anspruch 1, **dadurch gekennzeichnet, dass** die vertikale Verbreiterung des Leuchtpunktbereiches durch eine periodische Vertikalablenkung des Abtaststrahls innerhalb des Zeilenbereichs und/oder eine Vertikalverzerrung des Abtaststrahls innerhalb des Zeilenbereiches durchgeführt wird.

3. Verfahren nach Anspruch 1 oder 2, **dadurch gekennzeichnet, dass** ein oberer Grenzwert (b) vorgesehen ist,
wobei für Beträge des Vertikalkontrastwertes oberhalb des oberen Grenzwertes (b) keine vertikale Verbreiterung des Leuchtpunktbereiches durchgeführt wird.

4. Verfahren nach einem der vorherigen Ansprüche, **dadurch gekennzeichnet, dass** ein unterer Grenzwert (a) vorgesehen ist, wobei für Beträge des Vertikalkontrastwertes unterhalb des unteren Grenzwertes (b) eine konstante vertikale Verbreiterung des Leuchtpunktbereiches durchgeführt wird.

5. Verfahren nach Anspruch 4, **dadurch gekennzeichnet, dass** für Beträge des Vertikalkontrastwertes unterhalb des unteren Grenzwertes (b) die vertikale Verbreiterung des Leuchtpunktbereiches derartig durchgeführt wird, dass der Leuchtpunktbereich den Zeilenbereich des Fernseh- oder Monitorbildschirms zumindest weitgehend, vorzugsweise vollständig, ausfüllt.

6. Verfahren nach Anspruch 3 und Anspruch 4 oder 5, **dadurch gekennzeichnet, dass** zwischen dem unteren Grenzwert und dem oberen Grenzwert eine mit dem Vertikalkontrastwert abfallende, vorzugsweise linear abfallende, vertikale Verbreiterung des Leuchtpunktbereiches durchgeführt wird.

7. Verfahren nach einem der vorherigen Ansprüche, **dadurch gekennzeichnet, dass** der Vertikalkontrastwert aus einer Differenz des Bildeingangssignals (Y) und eines zeitlich verzögerten Bildeingangssignals (ý) ermittelt wird.

8. Verfahren nach Anspruch 7, **dadurch gekennzeichnet, dass** die zeitliche Verzögerung eine Zeile oder ein Halbbild plus eine halbe Zeile oder ein Halbbild minus eine halbe Zeile beträgt.

9. Verfahren nach einem der vorherigen Ansprüche, **dadurch gekennzeichnet, dass** ein dem Vertikalkonstrastwert entsprechendes Vertikalkontrastsignal (s1) ausgegeben und in Abhängigkeit von dem Vertikalkontrastsignal ein Modulationssignal (s2) erzeugt wird, und
das Modulationssignal (s2) einem Wobbelsignal (sw) für eine periodische Ablenkung überlagert wird, vorzugsweise durch Multiplikation, und ein moduliertes Wobbelsignal (s3) einer Vertikalablenkspule zugeführt wird.

10. Verfahren nach Anspruch 9, **dadurch gekennzeichnet, dass** das modulierte Wobbelsignal (s3) verstärkt und einem Vertikalablenksignal für den Abtaststrahl überlagert oder einer separaten Vertikal-Abtastspule zugeführt wird.

11. Vorrichtung zur Darstellung eines Fernsehbildes oder Monitorbildes auf einem Bildschirm, mit
einer Kontrast ermittelnden Einrichtung (1, 2) zur Aufnahme eines Bildeingangssignals (Y), Berechnung eines Vertikalkontrastwertes und Ausgabe eines dem Vertikalkontrastwert entsprechenden Vertikalkontrastsignals (S1),
einer Funktionseinrichtung (3) zur Aufnahme des Vertikalkontrastsignals (s1) und Ausgabe eines Modulationssignals (S2) in Abhängigkeit von einem Vergleich des Vertikalkontrastwertes mit mindestens einem Grenzwert (a, b),
einer Abtaststrahl verändernden Einrichtung (4, 5) zur Aufnahme des Modulationssignals (S2) und vertikalen Verbreiterung des Leuchtpunktbereiches in Abhängigkeit von dem Modulationssignal,
wobei in dem Fall, dass ein Betrag des Vertikalkontrastwertes unterhalb des Grenzwertes (a, b) liegt, eine geringere vertikale Verbreiterung des Leuchtpunktbereiches durchführbar ist als in dem Fall, dass der Betrag des Vertikalkontrastwertes oberhalb des Grenzwertes (a, b) liegt.

12. Vorrichtung nach Anspruch 11, **dadurch gekennzeichnet, dass** die Abtaststrahl verändernde Einrichtung ein Wobbelsignal (sw) für eine periodische Ablenkung ausgibt.

13. Vorrichtung nach Anspruch 11 oder 12, **dadurch gekennzeichnet, dass** die Kontrast ermittelnde Einrichtung eine Verzögerungseinrichtung (1) zur Aufnahme des Bildsignals (Y) und Ausgabe eines verzögerten Bildsignals (Y') und eine Differenz bildende Einrichtung (2) zur Aufnahme des Bildsignals (Y) und des verzögerten Bildsignals (Y') und Ausgabe eines Vertikalkontrastsignals (S1) aufweist.

14. Vorrichtung nach einem der Ansprüche 11 bis 13, **dadurch gekennzeichnet, dass** die Abtaststrahl verändernde Einrichtung (4, 5) eine Modulationseinrichtung (4) zur Aufnahme eines Modulationssignals (s2) und eines Wobbelsignals (sw) und Ausgabe eines modulierten Wobbelsignals (s3) aufweist.

15. Vorrichtung nach einem der Ansprüche 11 bis 14, **dadurch gekennzeichnet, dass** in dem Fall, dass der Betrag des Vertikalkontrastwertes einen unteren Grenzwert (a) unterschreitet, ein maximales Modulationssignal ausgebbar ist.

16. Vorrichtung nach einem der Ansprüche 11 bis 15, **dadurch gekennzeichnet, dass** in dem Fall, in dem der Betrag des Vertikalkontrastwertes einen oberen Grenzwert (b) überschreitet, ein Modulationssignal mit dem Wert Null ausgebbar ist.

17. Vorrichtung nach Anspruch 15 und 16, **dadurch gekennzeichnet, dass** in dem Fall, dass der Betrag des Vertikalkontrastwertes zwischen einem unteren Grenzwert (a) und einem oberen Grenzwert (b) liegt, ein mit dem Betrag des Vertikalkontrastwertes abfallendes, vorzugsweise linear abfallendes, Modulationssignal ausgebbar ist.
